Europäisches Patentamt

European Patent Office

Office européen des brevets

(11) Publication number: **0 098 169 B1**

# EUROPEAN PATENT SPECIFICATION

(45) Date of publication of patent specification: **10.05.89**

(51) Int. Cl.⁴: **G 06 F 11/30**, G 06 F 11/34

(21) Application number: **83303786.4**

(22) Date of filing: **30.06.83**

(54) Data processing system.

(30) Priority: 30.06.82 JP 113317/82

(43) Date of publication of application:
11.01.84 Bulletin 84/02

(45) Publication of the grant of the patent:
10.05.89 Bulletin 89/19

(84) Designated Contracting States:
DE FR GB

(56) References cited:
US-A-3 771 144
US-A-3 906 454
US-A-4 231 106

IBM TECHNICAL DISCLOSURE BULLETIN, vol.
21, no. 10, March 1979, pages 4173-4174, New
York, US; W.A. HALL et al.: "Software-assisted
trace functions for miroprocessors"
IBM TECHNICAL DISCLOSURE BULLETIN, vol.
12, no. 10, March 1970, pages 1617-1618, New
York, US; I.N. HIRSCH: "Memory map"
IBM TECHNICAL DISCLOSURE BULLETIN, vol.
20, no. 8, January 1978, pages 3229-3230, New
York, US; A.W. MAHOLICK et al.: "Event-driven
performance monitor"

(73) Proprietor: FUJITSU LIMITED
1015, Kamikodanaka Nakahara-ku
Kawasaki-shi Kanagawa 211 (JP)

(72) Inventor: Kato, Motokazu c/o Fujitsu Limited
Patent Department 1015 Kamikodanaka
Nakahara-ku Kawasaki (JP)

(74) Representative: Sunderland, James Harry et al
HASELTINE LAKE & CO Hazlitt House 28
Southampton Buildings Chancery Lane
London WC2A 1AT (GB)

Courier Press, Leamington Spa, England.

## Description

This invention relates to a data processing system comprising performance measurement system and more specifically the invention provides a data processing system capable of measuring performance using a timer provided therein.

Performance measurement of a data processing system which executes instructions on the main storage by fetching them give an important guideline to development of a system for the next phase, for example and design of softwares.

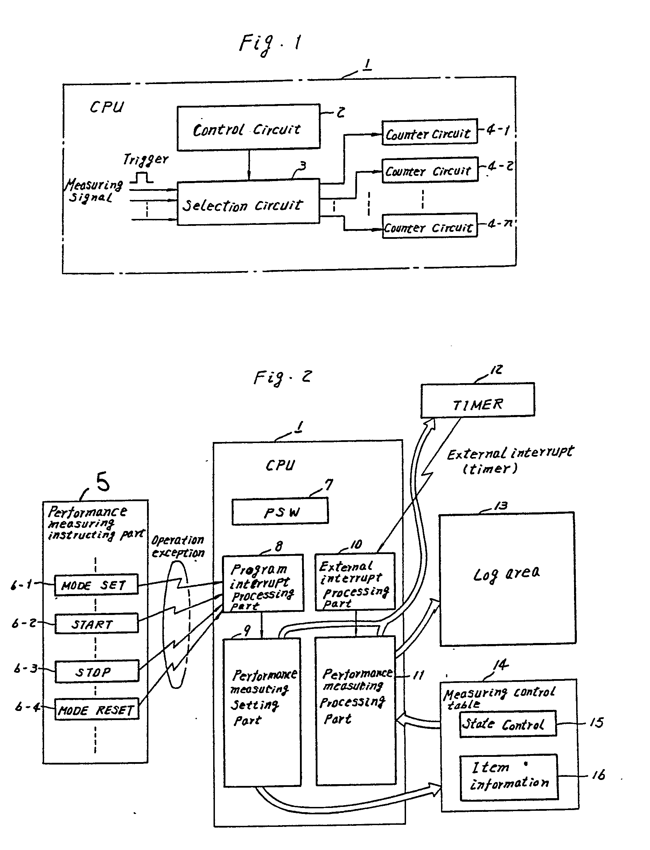

Fig. 1 is an example of existing system. An existing performance measurement of a data processing system is configured, for example, by the logic circuits of hardware as shown in Fig. 1. A processing system 1 is provided, for example, with the counter circuits 4-1 4-n for each performance measurement item such as instruction appearing frequency measurement etc. and a selection circuit 3 selects a signal of the point for performance measurement through the control of control circuit 2 and thereby each counter circuit 4-1 4-n are operated by the trigger signals determined for respective measuring items. According to such system of the prior art, a large amount of hardware only for performance measurement are necessary, the performance measurement items are fixed and performance of other items than that stored in the computer system precedingly cannot be measured. However, if performance measurement is carried out by the softwares operating under usual operation system, it is requested to consider that execution of a program itself for performance measurement realized by the software does not give any adverse effect on the result of measurement.

It is an object of this invention to provide a performance measurement system which has eliminated above problems and has flexibility so that desired performance measurement items can be set without using hardwares fixing the performance measurement items.

"Software-assisted Trace Functions for Microprocessors", Hall et al, IBM Technical Disclosure Bulletin, Vol. 21, No. 10, March 1979, pages 4173 and 4174, discloses that a counter which counts central processing unit (CPU) clock cycles and which generates a CPU interrupt, is loaded with a count which enables an interrupt to be forced during execution of a target instruction. START/STOP control of the counter is exercised by the processor via a Gate Decode decoded from the address bus.

"Memory Map", Hirsch, IBM Technical Disclosure Bulletin, Vol. 12, No. 10, March 1970, pages 1617 and 1618, discloses the generation of interrupts using invalid OP codes.

According to the present invention there is provided a data processing system, comprising:
measurement information storing means into which measurement information corresponding to performance measurement items is stored,
measurement control information storing means into which performance measurement item information and performance measurement condition information are stored as measurement control information,
a timer,
a performance measurement instructing part responsive to performance measurement setting instructions which, when issued, result in respective operation exception program interrupts,
a performance measurement setting part operable, in response to such an operation exception program interrupt, to set control information into the measurement control information storing means and to set an external interrupt mask for enabling interrupts by the timer,
a performance measurement processing part operable in response to external interrupts, generated from the tiner and responsive to measurement control information set in the measurement control information storing means to sample and to collect measurement information into the measurement information storing means.

Brief description of the drawings

Fig. 1 is a system by prior art as described above. Fig. 2 is the structure of an embodiment of this invention. Fig. 3 is an example of log area of this invention. Fig. 4 is an example of measurement control table. Fig. 5 through Fig. 9 are profiles of processings of the performance measurement setting part. Fig. 10 through Fig. 11 are profiles of processings of the performance measurement processing part. Fig. 12 is a structure of hardware of data processing system of the preferred embodiment.

In an embodiment shown in Fig. 2, 1 is a processing system, 5 is a performance measurement instructing part, 6-1~6-4 are performance measurement setting instructions and particularly 6-1 is a mode set instruction, 6-2 is a start instruction, 6-3 is a stop instruction, 6-4 is a mode reset instruction. 7 is a program state word (PSW), 8 is a program interruption processing part, 9 is a performance measurement setting part, 10 is an external interruption processing part, 11 is a performance measurement processing part, 12 is a timer, 13 is a log area, 14 is a measurement control table, 15 is a state control information setting area, 16 is an item information setting area.

The processing system 1 executes instructions on the main storage by fetching them and performs data processings. The performance measurement instructing part 5 is composed of machine words instruction groups indicating performance measurement of processing system 1, and particularly operates the firmware to be described later by issuing the performance measurement setting instructions 6-1 to 6-4 provided in this invention. As the performance measurement setting instructions, for example, the mode set instruction 6-1 for setting the performance measurement items by selecting them, start instruction 6-2 for instructing start of performance measurement, stop instruction 6-3 for instructing end of performance measurement, and mode reset instruction 6-4 releasing setting of selected performance measurement items. Generally, the machine word instruction consists of the instruction code indicating kind of instruction and operand indicating an object of operation, but undefined instruction code is assigned to above performance measurement setting instructions 6-1~6-4. Therefore, when these instructions 6-1~6-4 are executed by the processing system 1, a program interrupt is generated by operation exception due to detection of invalid instruction.

The program interrupt processing part 8 executes processings corresponding to various program interruption through the processings that when program interrupt is generated by various exceptional conditions detected by execution of instructions, control is transferred through the save of content of PSW 7 and update of it. If program interrupt occurs by execution of performance measurement setting instructions 6-1~6-4, the performance measurement setting part 9 structured by the firmware is started.

The performance measurement setting part 9 sets the control information designated by the mode set instruction 6-1 to the measurement control table 14 and controls start of measurement by setting the timer 12 in the timing of the start instruction 6-2. Details processings are described later. The time 12 operates in the same way as the ordinary CPU timer and when the present time has passed, an external interrupt is generated. A timer can newly be provided for performance measurement but an existing timer such as dispatch timer, for example, used for dispatch of virtual computer system may also be used. In this embodiment, a dispatch timer is used.

When an external interrupt is generated, an external interrupt processing part 10 is started. The external interrupt processing part 10 starts the performance measurement processing part 11 by the interrupt code when such interrupt is caused by the timer 12. The performance measurement processing part 11 is structured by firmware and as described later, collects the performance measurement information and stores it to the log area 13. An external interrupt due to the timer 12 is generated with a period designated freely by the mode set instruction 6-1 and therefore the performance measurement processign part 11 randomly performs sampling of measurement data with an external interrupt considered as a trigger.

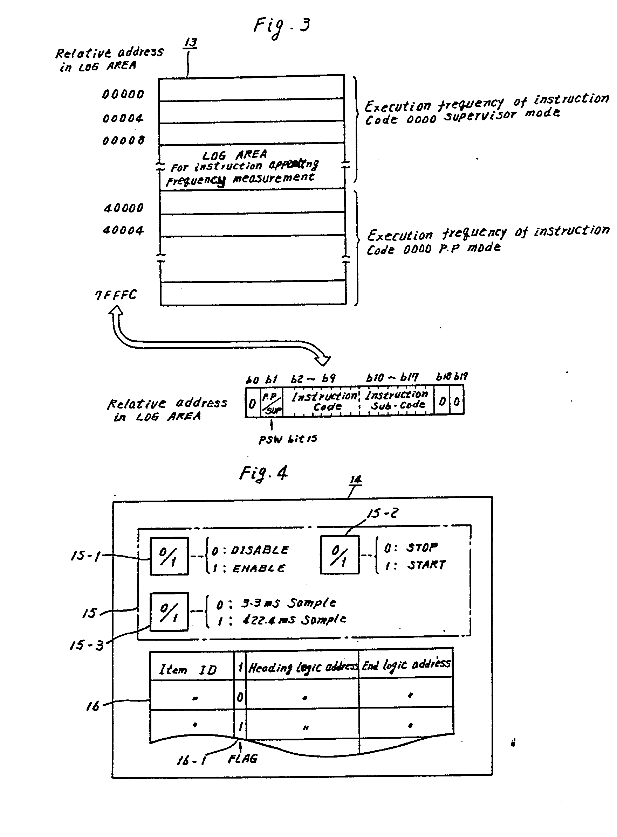

As a performance measurement item, there is, for example, a appearing frequency measurement of each instruction. The log area 13 for the instruction appearing frequency measurement is for example constructed as shown in Fig. 3 and is reserved within the main storage. The area of 4 bytes is reserved in each instruction code for each of the supervisor (SUP) mode of the processing system 1 and a problem program (PP) mode, and a relative address in the log area 13 is determined, as shown in the figure, by the state mode obtained from the 15th bit of PSW7 and the instruction code of 16th bit containing the instruction sub-code. Therefore, the performance measurement processing part 11 is capable of counting up the directly checked instruction appearing frequency.

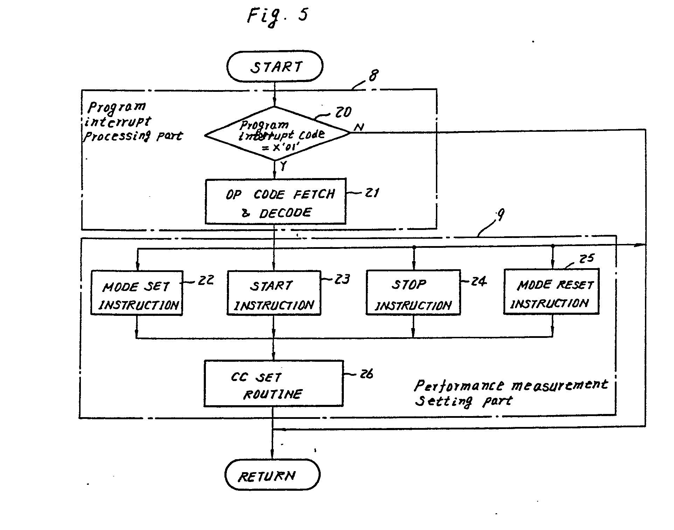

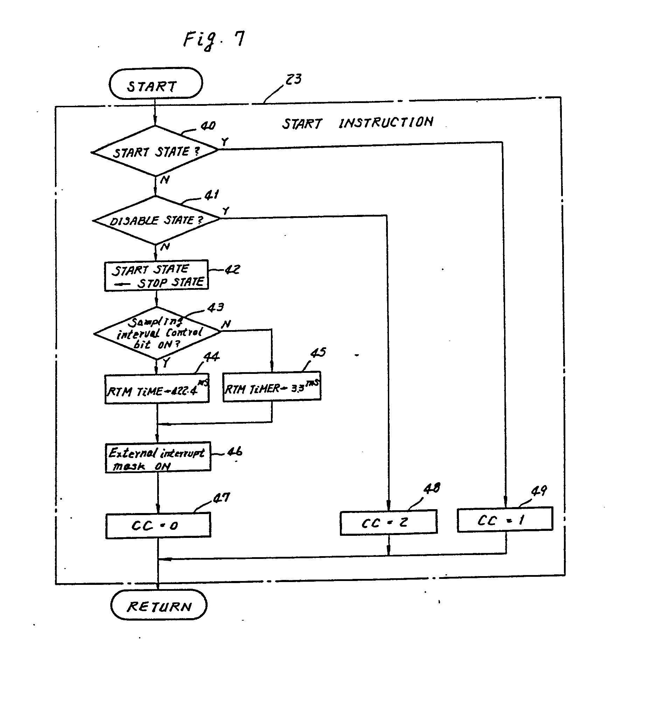

The measurement control table 14 is for example configured as shown in Fig. 4. In the start control information setting domain 15 of the measurement control table 14, the state flag 15-1 which is set to "1" by the mode set instruction 6-1 or to "0" by the mode reset instruction 6-4 and the state flag 15-2 which is set to "1" by the start instruction 6-2 or to"0" by the stop instruction 6-3. In addition, the sampling interval control bit 15-3 is also provided. In this embodiment, the sampling period of 3.3 ms or 422.4 ms can be selected by OFF/ON of said bit 15-3, it is naturally possible to freely select more sampling periods by increasing a number of instructing bits. In the item information setting doman 16, for example, the item ID indicating the measurement items and the address indicating the collecting range thereof are set for each item. FLAG 16-1 indicates whether the logical address indicating the collecting range is valid or invalid.

By referring to Fig. 5 through Fig. 9, processings of the performance measurement setting part 9 is described.

When, a program interrupt is generated, the program interrupt processing part 8 is started and the program interrupt processing part 8 judges first, by the processing 20 shown in Fig. 5, whether the program interrupt code is the operation exception (X'01') or not. When it is not operation exception, ordinary program interrupt processing is executed. In case it is operation exception, an instruction code which has caused program interrupt is fetched by the processing 21 and then analyzed. As a result of analysis, when the performance measurement setting instruction 6-1 to 6-4 is judged, the performance measurement setting part 9 is started.

The performance measurement setting part 9 calls, with the instruction code, the mode set instruction processing part 22, start instruction processing part 23, stop instruction processing part 24 and mode reset instruction processing part 25, executes the processing of instructions 6-1 to 6-4 as described later. Then processing returns to the interrupt generating area after the condition code (CC) indicating result of execution is set.

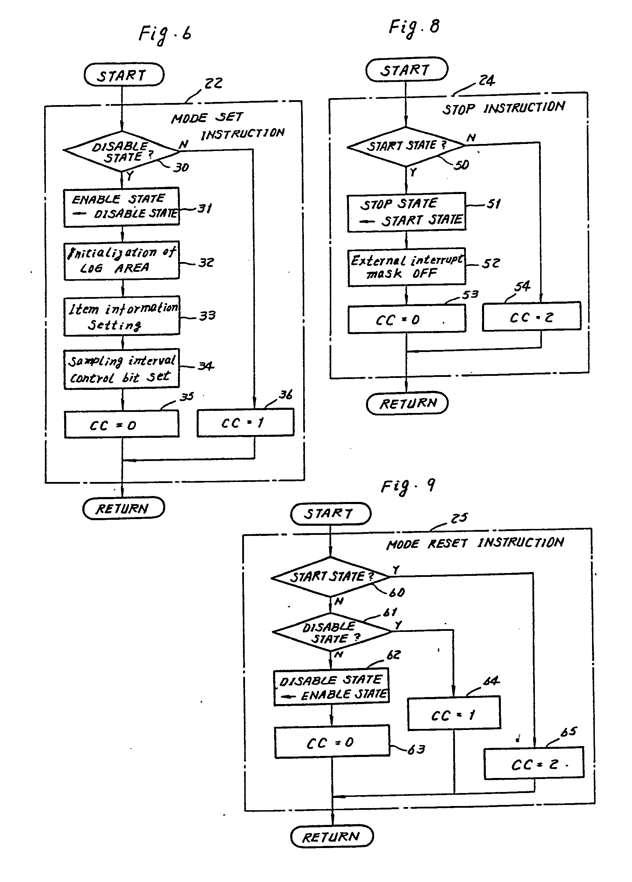

The mode set instruction processing part 22 executes processings as shown in Fig. 6. First, according to the processing 30 shown in Fig. 6, it is checked, by referring to the state flag 15-1 of the measurement control table 14 shown in Fig. 4, whether current state is ENABLE or DISABLE. If current state is ENABLE, CC is set to "1" by the processing 36 and the processing returns to the calling area. If the state is DISABLE, the state flag 15-1 is turned ON by the processing 31 and thereby the state becomes ENABLE. Then, the log area 13 is initialized by the processing 32 and the item information is set to the measurement control table 14 on the basis of the information designated by the operand of mode set instruction 6-1 by the processing 33. Moreover, the sampling interval control bit 15-3 is set to "0" or "1" by the processing 34 and finally CC is set to "0" indicating the normal end by the processing 35 and then processing returns to the calling area.

The start instruction processing part 23 executes processing as shown in Fig. 7. First, the state flags 15-2 and 15-1 of the measurement control table 14 are checked by the processings 40 and 41 shown in Fig. 7. If the START state is already started, CC is set to "1" by the processing 49, and when the current state is DISABLE, CC is set to "2" by the processing 48, and the processing returns to the called area. If the current state is STOP state and ENABLE state, control is transferred to the procsing 42, the state flag 15-2 is turned ON and thereby the START state appears. Then, if the sampling interval control bit 15-3 is ON as a result of reference thereto, the dispatch timer 12 is set to 422.4 ms by the processing 44, or such bit is OFF, the dispatch timer 12 is set to 3.3 ms by the processing 45. Moreover, external interrupt mask of timer 12 is turned ON by the processing 46 and thereby inhibit of external interrupt is cancelled. Thereby, an external interrupt is generated after time passage of 3.3 ms or 422.4 ms. n the external interrupt mask is turned ON, CC is set to "0" by the processing 47 and the processing returns to the calling area.

The STOP instruction processing part 24 executes processing as shown in Fig. 8. First, the START state has started or not is judged by the processing 50. If current state is STOP, CC is set to "2" by the processing 54 and the processing returns. When the current state is START, it is changed to the STOP state by the processing 51, and external interrupt mask due to the timer 12 is turned ON by the processing 52, thereby inhibiting interruption. Thereby, sampling is suspended. Then CC is set to "0" by the processing 53 and thereafter the processing returns to the calling area.

The mode reset instruction processing part 25 executes the processings as indicated in Fig. 9. It is first checked whether current state is START or not by the processing 60. When the START state has started, CC is set to "2" by the processing 65, and the processing returns to the calling area. Then, it is checked by the processing 61 whether current state is DISABLE or not. When current state is DISABLE, CC is set to "1" by the processing 64. When it is ENABLE, it is changed to DISABLE and CC is set to "0" by the processing 63. Then, processing returns to the calling area.

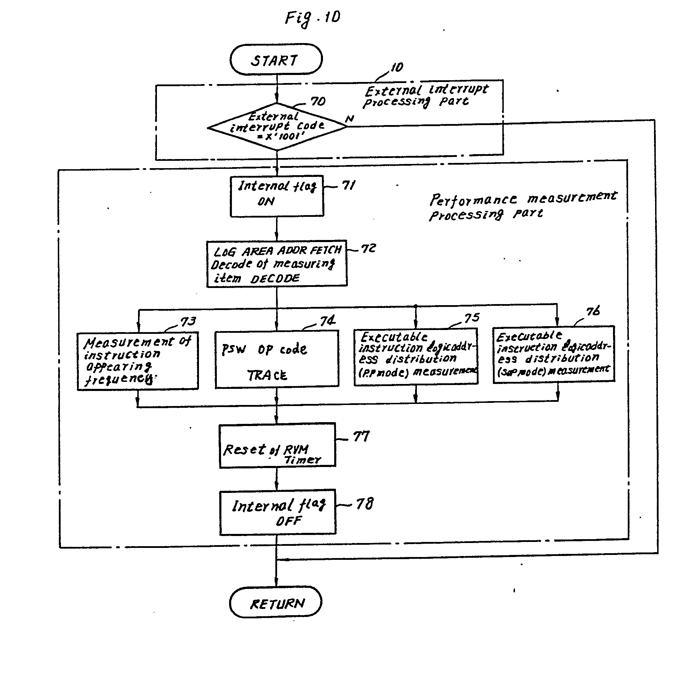

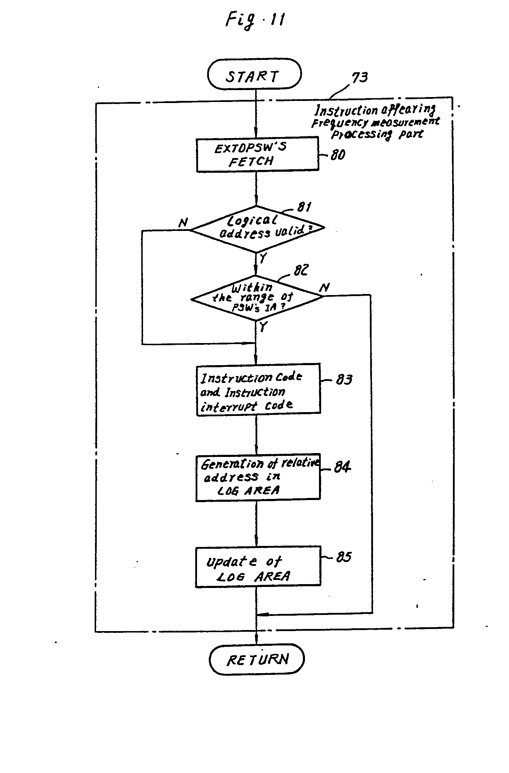

Processings of the performance measurement processing part 11 is then described by referring to Fig. 10 and Fig. 11.

When an external interrupt is generated, the external interrupt processing part 10 is started.

The external interrupt processing part 10 judges whether the external interrupt code is X'1008' or not, namely it is an interrupt by the dispatch timer 12 or not by the processing 70 shown in Fig. 10. If not, existing ordinary interrupt processing is carried out. If an interrupt by timer 12 is generated, control is transferred to the performance measurement processing part 11.

The performance measurement processing part 11 turns ON the internal flag by the processing 71. This internal flag is a control flag for sequential processing in such a case that the external interrupt is generated in double. Then, an address of log area 13 is fetched by the processing 72 and the measurement item is decoded based on the measurement control table 14. Thereafter, according to the result of decoding, various measurement processing part such as the instruction appearing frequency measurement processing part 73, PSW instruction code trace processing part 74, executable instruction logic address distribution measurement processing part 75 in the problem program mode, executable instruction logic address distribution processing part 76 etc. are called. By these processings, measurement information about processing system 1 at the interrupt timing is collected in the specified area of the log area. For the next sampling, a value of 3.3 ms or 422.4 ms is set to the dispatch timer 12 by the processing 77. Then after said internal flag is turned OFF by the processing 78, the processing returns to the interrupt generating point.

The instruction appearing frequency processing part 73 executes processings, for example, as shown in Fig. 11. First, the old PSW of external interrupt to which the PSW 7 at the time when external interrupt is generated is fetched by the processing 80 shown in Fig. 11. Then, it is checked whether the logical address is valid or not by referring to the FLAG 16-1 of the measurement control table 14 by the processing 81. If it is invalid, it is checked, by the processing 82, whether an instruction address obtained from said old PSW is within the measurement information collecting range, designated by the measurement control table 14, or not. If it is out of the range, no information is collected. If within the range, the instruction code and instruction sub-code at the time when an interrupt is generated is fetched on the basis of the instruction address of the old PSW by the processing 83. As described for Fig. 3, the relative address in the log area 13 is generated by the processing 84 and appearing frequency of the corresponding instruction is updated by the processing 85. When above processings are repeated for each external interruption generated with the preset sampling synchronization, a randomized accurate instruction appearing frequency information as a whole can be obtained. If the executing period of each instruction in the processing system 1 is different, it is necessary to adjust result of collection by weighting them with the inverse value of executing time.

The PSW instruction code trace processing part 74 performs the execution to directly trace contents or instruction code of PSW when an interrupt is generated to the log area 13. The executable instruction logic address distribution measurement processing parts 75 and 76 execute the processing for counting the appearing frequency of executable instruction for each presegmented logical address range. In the same way, the instruction can be called by providing the processing part which collects desired measurement information.

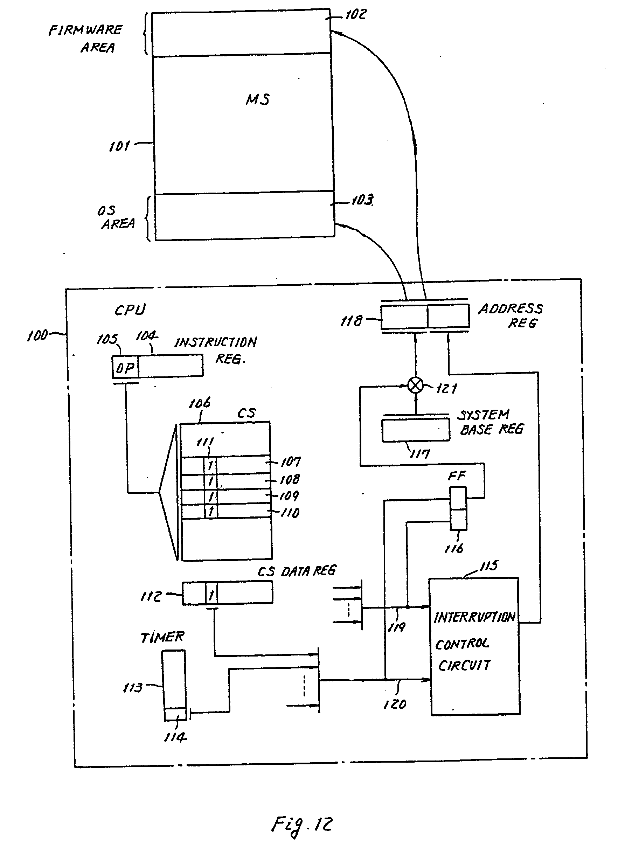

The, hardware operation imxohis embodiment is described. In Fig. 12, 100 is a central processing unit (CPU), 101 is a main storage (MS), 102 is a firmware domain, 103 is an operating system (OS) domain, 104 is an instruction register, 105 is an OP code part, 106 is a control storage (CS), 107~110 are micro operation words corresponding to MODE SET instruction 6-1, START instruction 6-2, STOP instruction 6-3 and MODE RESET instruction 6-4 shown in Fig. 2. 111 is an invalid instructing flag, 112 is a CS data register, 113 is a timer circuit, 114 is a timer interrupt flag, 115 is an interrupt control circuit, 116 is a system control latch, 117 is a system base register, 118 is an address register, 119 is an interrupt signal line instructing ordinary interrupt to the OS domain, 120 is an interrupt signal line instructing interrupt to the firmware domain, and 121 is a control gate.

First, during execution of the ordinary program processings, the MODE SET instruction 6-1, START instruction 6-2, STOP instruction 6-3, MODE RESET instruction 6-4 are read and they are set to the instruction register 104. Then, the corresponding micro operation words 107~110 in the CS106 are also read by the OP code 105 of it. Since above instructions are invalid instructions, the invalid instructing flag 111 in the micro operation word is turned ON ("1") and this invalid instructing flag is held by the CS data register 112. When the invalid instructing flag becomes ON, the interrupt control circuit 115 is started through the interrupt signal line 120 and simultaneously, the system control latch 116 is set. The interrupt control circuit 115 sets the specified address in the OS area 103 to the address register 118 but when the system control latch 16 is ON, contents of system base register 117 is coupled to the upper part of the address register 118 through the control gate 121. For this reason, when the system control latch 116 is in the set state, start to the OS area 103 is not triggered but start to the firmware domain 102 is triggered. Thereby, the instruction groups within the firmware domain are sequentially read and the performance measurement setting processing is carried out.

When a count value set by the timer circuit 113 is completed, tmectimer interrupt flag 114 becomes ON and the interrupt control circuit 115 is started through the interrupt signal line 120. At this time, the operation similar to that carried out when the invalid instruction flag is ON is also carried out and start to the firmware domain 102 is triggered. In the case of this timer interrupt, the performance measurement processing etc. is carried out by the instruction groups within the firmware domain.

In the case of ordinary interrupt operation to the OS area 108, the interrupt signal line 119 becomes ON and the system control latch 116 is reset. Therefore, any incremental shift of address is not carried out.

As described above, this invention is capable of setting desired performance measurement items without using an exclusive hardware for fixing the performance measurement items. Particularly, various functions of existing processing system can directly be used. Therefore, this invention can be introduced rather easily into the existing processing system. The log area in the desired size can also be provided, ensuring excellent flexibility and expandability. Moreover, since the sampling interval can also be adjusted freely, desired measurement information can be obtained any time desired by properly adjusting the overhead for the ordinary processing by the performance measurement.

## Claims

1. A data processing system, comprising
measurement information storing means (13) into which measurement information corresponding to performance measurement items is stored,
measurement control information storing means (14) into which performance measurement item information and performance measurement condition information are stored as measurement control information,
a timer (12),
a performance measurement instructing part (5) responsive to performance measurement setting instructions (6-1, 6-2, 6-3, 6-4) which, when issued, result in respective operation exception program interrupts,
a performance measurement setting part (9) operable, in response to such an operation exception program interrupt, to set (mode set 6-1, fig. 6) control information into the measurement control information storing means (14), and to set (start instruction 6-2, fig. 7; 46) an external interrupt mask for enabling interrupts by the timer (12),
a performance measurement processing part (11) operable in response to external interrupts, generated from the timer (12), and responsive to measurement control information set in the measurement control information storing means (14), to sample and to collect measurement information into the measurement information storing means (13).

2. The data processing system according to claim 1, wherein as the said performance measurement condition information, sampling period information to be set to said timer (12) is prepared.

3. The data processing system according to claim 1 or claim 2, wherein the processing by the performance measurement setting part (9) and said performance measurement processing part (11) are executed by instruction groups provided in the firmware domain on main storage.

**Patentansprüche**

1. Datenverarbeitungssystem mit Meßinformations-Speichereinrichtungen (13), in welche Meßinformation gespeichert wird, die Leistungsmeßgrößen entspricht, einer Leistungsstuerinformations-Speichereinrichtung (14), in die Leistungsmeßgrößeninformation und Leistungsmeßzustandsinformation als Meßsteuerinformation gespeichert werden, einem Zeitgeber (12), einem Leistungsmeß-Instruktionsteil (5), der auf Leistungsmeß-Einstellinstruktionen (6-1, 6-2, 6-3, 6-4) anspricht, die, wenn sie ausgegeben werden, in entsprechende Betriebsausnahmebedingungs-Programmunterbrechungen resultieren, einem Leistungsmeßeinstellteil (9), der betreibbar ist, in Abhängigkeit von solch einer Betriebsausnahmebedingungs-Programmunterbrechung, um Steuereinformation in die Meßsteuerinformationsspeichereinrichtung (14) zu setzen (Modus Set 6-1, Figur 6) und um eine externe Unterbrechungsmaske zum Aktivieren von Unterbrechungen durch den Zeitgeber (12) zu setzen (Startinstruktion 6-2, Figur 7: 46) und einem Leistungsmeß-Verarbeitungsteil (11), der in Abhängigkeit von externen Unterbrechungen, die von dem Zeitgeber (12) generiert werden, betreibbar ist und auf die Meßsteuereinformation anspricht, die in der genannten Meßsteuerinformationsspeichereinrichtung (14) gesetzt ist, um Meßinformation auszuwählen und in der Meßinformations-Speichereinrichtung (13) zu sammeln.

2. Datenverarbeitungssystem nach Anspruch 1, bei dem als die genannte Leistungsmeßzustandsinformation, die Auswahlperiodeninformation, die in den genannten Zeitgeber (12) gesetzt werden soll, präpariert wird.

3. Datenverarbeitungssystem nach Anspruch 1 oder 2, bei dem die Verarbeitung durch das Leistungsmeß-Setzteil (9) und das genannte Leistungsmeß-Verarbeitungsteil (11) durch Instruktionsgruppen ausgeführt werden, die in der Firmwaredomäne auf dem Hauptspeicher vorgesehen sind.

**Revendications**

1. Système de traitement de données, comprenant:

un moyen de mémorisation d'informations de mesure (13) dans lequel sont mémorisées des informations de mesure correspondant à des éléments de mesure de performances, un moyen de mémorisation d'informations de commande de mesure (14) dans lequel sont mémorisées des informations d'élément de mesure de performances et des informations de condition de mesure de performances comme informations de commande de mesure, une horloge (12), une partie pour donner l'instruction d'une mesure de performances (5) réagissant à des instructions d'établissement de mesure de performances (6-1, 6-2, 6-3, 6-4) qui, lorsqu'elles sont émises, entraînent des interruptions de programme d'exception d'opération respectives, une partie d'établissement de mesure de performances (9) pouvant être mise en fonctionnement, en réponse à une telle interruption de programme d'exception d'opération, pour établir (ETABLISSEMENT DE MODE 6-1, Figure 6) des informations de commande dans le moyen de mémorisation d'informations de commande de mesure (14), et pour établir (instruction DEPART 6-2, Figure 7: 46) un masque d'interruption extérieure en vue de valider des interruptions par l'horloge (12), une partie de traitement de mesure de performances (11) pouvant être mise en fonctionnement en réponse à des interruptions extérieures, générées par l'horloge (12) et réagissant aux informations de commande de mesure établies dans le moyen de mémorisation d'informations de commande de mesure (14) pour échantillonner et pour collecter des informations de mesure dans le moyen de mémorisation d'informations de mesure (13).

2. Système de traitement de données selon la revendication 1, dans lequel sont préparées comme informations de condition de mesure de performance, des informations de période d'échantillonnage à établir dans l'horloge (12).

3. Système de traitement de données selon l'une quelconque des revendications 1 et 2, das lequel les traitements par la partie d'établissement de mesure de performances (9) et par la partie de traitement de mesure de performances (11) sont exécutées au moyen de groupes d'instructions prévus dans le domaine microprogrammé de la mémoire centrale.

EP 0 098 169 B1

Fig. 1

Fig. 2

1

## Fig. 3

Relative address
in LOG AREA

00000

00004          } Execution frequency of instruction
               Code 0000 supervisor mode
00008

LOG AREA
For instruction appearing
Frequency measurement

40000

40004          } Execution frequency of instruction
               Code 0000 P.P mode

7FFFC

Relative address
in LOG AREA

| b0 | b1 | b2 ~ b9 | b10 ~ b17 | b18 | b19 |
|----|----|---------|-----------|-----|-----|
| 0 | P.P/Sup | Instruction Code | Instruction Sub-Code | 0 | 0 |

PSW bit 15

## Fig. 4

14

15-1    0/1 -- { 0 : DISABLE
                1 : ENABLE            15-2    0/1 -- { 0 : STOP
                                                      1 : START

15      0/1 -- { 0 : 3.3 mS Sample
                 1 : 422.4 mS Sample

15-3

| Item ID | 1 | Heading logic address | End logic address |
|---------|---|----------------------|-------------------|
| " | 0 | . | . |
| . | 1 | " | . |

16-1   FLAG

16

Fig. 5

```
                    ┌──────────┐
                    │  START   │
                    └────┬─────┘
                         │                    ⌐8
  ┌ ─ ─ ─ ─ ─ ─ ─ ─ ─ ─ ─│─ ─ ─ ─ ─ ─ ─ ─ ─ ─ ─ ─ ─ ─┐
  │ Program              │          20               │
  │ interrupt           ╱─┴─╲      ╱                  │
  │ Processing Part    ╱ Program ╲    N               │
  │                   ◇ interrupt code ◇──────────────┼──
  │                    ╲  = X'01' ╱                   │
  │                     ╲───┬───╱                     │
  │                      Y  │                         │
  │                 ┌───────┴───────┐    21           │
  │                 │ OP CODE FETCH │───              │
  │                 │  & DECODE     │                 │
  └ ─ ─ ─ ─ ─ ─ ─ ─ └───────┬───────┘ ─ ─ ─ ─ ─ ─ ─ ─ ┘
                            │              ⌐9
```

MODE SET INSTRUCTION — 22

START INSTRUCTION — 23

STOP INSTRUCTION — 24

MODE RESET INSTRUCTION — 25

CC SET ROUTINE — 26

Performance measurement Setting part

RETURN

Fig. 7

```
                    START
                                              23
                                    START   INSTRUCTION
                         40
                                    Y
                    START STATE ?
                         N
                         41
                                    Y
                    DISABLE STATE ?
                         N
                    START STATE      42
                    → STOP STATE
                         43
                    Sampling         N
                    interval control
                    bit ON ?
                         Y        44              45
                    RTM TiME→422.4      RTM TiMER→ 3.3ms
                    
                    External interrupt  46
                    mask  ON
                         47                 48           49
                    CC = 0              CC = 2       CC = 1
                    
                    RETURN
```

Fig. 6

```
        ( START )
                        22
              MODE SET
                   INSTRUCTION
         /DISABLE \ N
         \ STATE ? /
              30
            Y

       ┌─────────────────┐
       │ ENABLE STATE    │─ 31
       │ → DISABLE STATE │
       └─────────────────┘

       ┌─────────────────┐
       │ Initialization of│─ 32
       │ LOG AREA        │
       └─────────────────┘

       ┌─────────────────┐
       │ Item information │─ 33
       │ Setting         │
       └─────────────────┘

       ┌─────────────────┐
       │ Sampling interval│─ 34
       │ Control bit set │
       └─────────────────┘
          35            36
       ┌────────┐   ┌────────┐
       │ CC = 0 │   │ CC = 1 │
       └────────┘   └────────┘

        ( RETURN )
```

Fig. 8

```
        ( START )
                        24
              STOP INSTRUCTION

         /START STATE?\ N
         \            /
              50
            Y

       ┌─────────────────┐
       │ STOP STATE      │─ 51
       │ → START STATE   │
       └─────────────────┘

       ┌─────────────────┐
       │ External interrupt│─ 52
       │ mask OFF        │
       └─────────────────┘
             53          54
       ┌────────┐   ┌────────┐
       │ CC = 0 │   │ CC = 2 │
       └────────┘   └────────┘

        ( RETURN )
```

Fig. 9

```
        ( START )
                        25
              MODE RESET INSTRUCTION

         /START STATE?\ Y
         \            /
              60
            N
         /DISABLE \ Y
         \ STATE ? /
              61
            N
            62
       ┌─────────────────┐        ┌────────┐
       │ DISABLE STATE   │        │ CC = 1 │ 64
       │ → ENABLE STATE  │        └────────┘
       └─────────────────┘
                                  ┌────────┐
       ┌────────┐                 │ CC = 2 │ 65
       │ CC = 0 │ 63              └────────┘
       └────────┘

        ( RETURN )
```

Fig. 10

```
        ┌───────────┐
        │   START   │
        └───────────┘
              │                          ╭─ 10
┌─────────────┼──────────────────────────────────────┐
│             ▼            ╭─ 70    External interrupt │
│         ◇─────────◇              processing part     │
│        ╱  External  ╲                                │
│       ◇ interrupt code ◇──N──────────────────────────┼──┐
│        ╲ = X'1001'  ╱                                │  │
│         ◇─────────◇                                   │  │
└─────────────┼────────────────────────────────────────┘  │
              │                                            │
┌─────────────┼────────────────────────────────────────┐  │
│             ▼         ╭─ 71    Performance measurement │  │
│        ┌─────────┐            Processing part          │  │
│        │Internal flag│                                 │  │
│        │    ON    │                                    │  │
│        └─────────┘                                     │  │
│             │                                          │  │
│             ▼                 ╭─ 72                     │  │
│   ┌────────────────────┐                               │  │
│   │ LOG AREA ADDR FETCH │                              │  │
│   │ Decode of measuring │                              │  │
│   │ item DECODE         │                              │  │
│   └────────────────────┘                               │  │
│             │                                          │  │
│   ┌────┬────┴────┬──────────┬──────────┐               │  │
│   ▼ 73 ▼ 74      ▼ 75       ▼ 76        │               │  │
│ ┌──────┐┌──────┐┌──────────┐┌──────────┐               │  │
│ │Measure││PSW OP││Executable││Executable│               │  │
│ │ment of││code  ││instruction││instruction│             │  │
│ │instruc││TRACE ││logicaddr-││logicaddr-│               │  │
│ │tion   ││      ││ess distr.││ess distr.│               │  │
│ │appear.││      ││(PP mode) ││(SP mode) │               │  │
│ │frequen││      ││measuremt ││measuremt │               │  │
│ └──────┘└──────┘└──────────┘└──────────┘               │  │
│   │       │         │          │                        │  │
│   └───────┴────┬────┴──────────┘                        │  │
│                ▼        ╭─ 77                            │  │
│        ┌──────────────┐                                 │  │
│        │ Reset of RVM │                                 │  │
│        │     Timer    │                                 │  │
│        └──────────────┘                                 │  │
│                │        ╭─ 78                            │  │
│        ┌──────────────┐                                 │  │
│        │Internal flag │                                 │  │
│        │     OFF      │                                 │  │
│        └──────────────┘                                 │  │
└────────────────┼────────────────────────────────────────┘  │
                 │◄──────────────────────────────────────────┘
                 ▼
           ┌───────────┐
           │  RETURN   │
           └───────────┘
```

Fig · 11

```
                    ( START )          73
                        |  ┌ ─ ─ ─ ─ ─ ─ ─ ─ ┐
                        |                    Instruction appearing
                        |                    Frequency measurement
                        |                    Processing part
                   ┌─────────┐
                   │ EXTOPSW'S │── 80
                   │  FETCH    │
                   └─────────┘
                        |
                        |        ── 81
              N      ◇ Logical  ◇
            ◇────────  address valid?
            |             | Y
            |             |         ── 82
            |          ◇ Within        ◇   N
            |          the range of  ◇────────┐
            |          PSW's IA ?    |
            |             | Y        |
            |─────────────┘          |
                        |            |
                ┌──────────────┐     |
                │ Instruction Code │── 83  |
                │ and Instruction  │     |
                │ interrupt code   │     |
                └──────────────┘     |
                        |            |
                ┌──────────────┐     |
                │ Generation of relative │── 84  |
                │ address in    │     |
                │ LOG AREA      │     |
                └──────────────┘     |
                        |            |
                ┌──────────────┐     |
                │ Update of     │── 85  |
                │ LOG AREA      │     |
                └──────────────┘     |
                        |            |
                        |←───────────┘
                        |
                    ( RETURN )
```

Fig. 12